Europäisches Patentamt

(19) European Patent Office

Office européen des brevets

(11) Publication number: **0 022 169**

**B1**

(12) **EUROPEAN PATENT SPECIFICATION**

(45) Date of publication of patent specification: **08.06.83**

(51) Int. Cl.³: **B 23 G 1/04**

(21) Application number: **80102947.1**

(22) Date of filing: **27.05.80**

(54) **Apparatus for generating threads and the like.**

(30) Priority: **01.06.79 SE 7904825**

(43) Date of publication of application:
**14.01.81 Bulletin 81/2**

(45) Publication of the grant of the patent:
**08.06.83 Bulletin 83/23**

(84) Designated Contracting States:
**AT BE CH DE FR GB IT LI NL**

(56) References cited:
**CH - A - 564 994**
**DE - A - 2 709 776**
**FR - A - 2 154 191**

(73) Proprietor: **Guntell, Per-Olof**
**Bryngelhusgatan 13**
**S-302 47 Halmstad (SE)**
(73) Proprietor: **Svensson, Leif**
**Mellangatan 6**
**S-360 75 Alstermo (SE)**

(72) Inventor: **Guntell, Per-Olof**
**Bryngelhusgatan 13**
**S-302 47 Halmstad (SE)**
Inventor: **Svensson, Leif**
**Mellangatan 6**
**S-360 75 Alstermo (SE)**

(74) Representative: **Linde, Leif**
**Vernamo Patentbyra AB Växjövägen 2**
**S-331 00 Värnamo (SE)**

Apparatus for generating threads and the like.

The present invention relates to an apparatus for generating threads and especially an apparatus for generating threads in a material which is adapted to constitute a mould surface in the manufacturing of threaded parts of plastic or other materials which are subjected to dimensional changes by means of moulding, for example compression moulding or injection moulding.

An apparatus of this kind comprises a device for setting up a work piece having a surface of revolution in which the thread is intended to be formed, a tool for generating a thread forming groove in the surface of revolution and a device for rotating the surface of revolution around its axis in relation to the tool and for feeding the surface in the direction of said axis and in relation to the tool for providing the pitch of the thread.

CH—A—564994 discloses an apparatus having these features but which is not concerned with the manufacture of parts subjected to dimensional changes after manufacture.

In the case that the work-piece is intended to constitute a tool for generating a thread in a material of the kind which is subjected to dimensional changes after the manufacturing, for example the compression moulding or injection moulding, it is necessary that the thread of the work-piece is provided with a pitch which is compensated or modified with regard to the subsequent dimensional changes. Such dimensional changes take place especially in plastic materials, and for example when manufacturing plastic parts by means of injection moulding there is often a linear mould shrinkage which exceeds 1%.

It is realized that it is a complicated and time consuming work to compensate or modify the pitch of the thread with regard to the dimensional changes in the manufacturing of tools which are to be used for generating threads in materials which are subjected to dimensional changes.

Therefore, it is an object of the present invention to provide an apparatus for generating threads and the like by means of which the above problems are obviated.

In order to comply with said object the apparatus according to the invention is characterized in that the device for rotating and feeding the work-piece comprises a compensation device adapted to modify to a predetermined degree the relationship between the rotation and feeding of the surface of revolution and thereby the pitch of the thread from an input value to a value which is modified to a desired degree.

In a preferred embodiment of the apparatus according to the invention the device for rotating and feeding the work-piece comprises a lead screw which is connected with a stationary thread, a housing which is connected with the lead screw and is displaceable along a guide, the housing being adapted to be displaced along the guide by the rotation of the lead screw, a clamping device which is rotatably journalled in the housing for holding the work-piece and a transmission device for transmitting the rotation of the lead screw to the clamping device and the work-piece set up therein at a desired ratio.

Thereby said transmission device can comprise a conventional toothed wheel gearing comprising replaceable gears by means of which the desired ratio and thereby the desired compensation can be determined. However, it is preferred that the transmission device comprises a device for electronically sensing the rotation of the lead screw and generating a number of pulses in relation thereto, said pulses being supplied to a computer, in which the number of pulses is modified with regard to the desired compensation and the compensated pulses are supplied to a step motor which is driving the clamping device. Thereby, the desired compensation can be set directly on the computer.

The invention is described in the following with reference to the accompanying drawings.

Fig. 1 schematically shows an embodiment of an apparatus according to the invention.

Fig. 2 schematically shows another embodiment of an apparatus according to the invention.

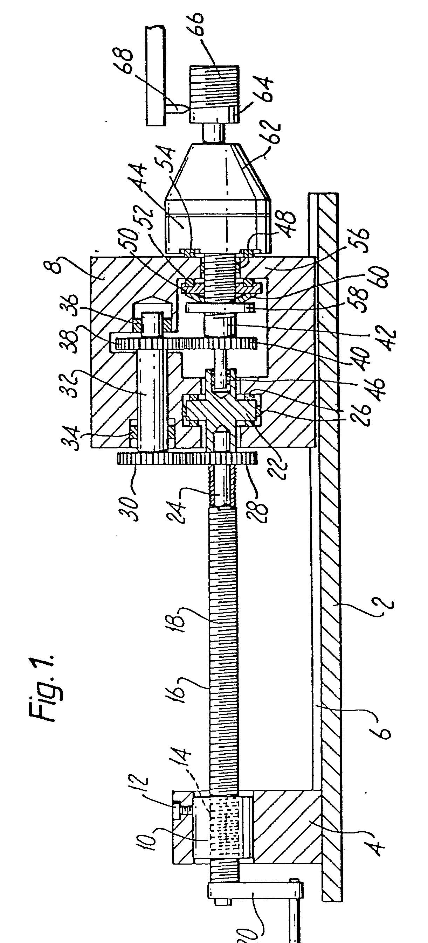

In Fig. 1 there is partly in section shown an apparatus according to the invention for generating a work-piece provided with threads, for example a threading electrode. In accordance with the present invention the apparatus is designed for compensating the pitch of the generated thread with regard to the dimensional changes of a material, preferably a plastic material, wherein a thread is to be formed by means of the work-piece manufactured in the apparatus according to the invention.

The apparatus according to the invention comprises a base plate 2 which supports a carrier 4 as well as a housing 8 which is displaceable along a guide 6. In the carrier 4 there is provided a nut 10 which is replaceably retained in the carrier 4 by means of a screw 12. The nut 10 is provided with an inner thread 14 which cooperates with an outer thread 16 of a lead screw 18 which is rotatably mounted in the nut 10. At its outer end the lead screw 10 is provided with a crank 20, by means of which the lead screw can be rotated. At its inner end the lead screw 18 is connected with a shaft 22 by means of a through bolt 24. The shaft 22 is journalled in the housing 8 by means of a roller bearing 26. When the lead screw 18 is rotated by means of the crank 20 the lead screw will be displaced in the axial direction because of the engagement with the nut 10, so that the housing 8 is displaced along the guide 6.

Between the lead screw 18 and the shaft 22 there is positioned a gear wheel 28 which is fixedly connected with the lead screw and the shaft. The gear wheel 28 engages a gear wheel 30 which is fixedly connected with a shaft 32 rotatably journalled in the housing. The shaft 32 is journalled in the housing 8 by means of roller bearings 34 and 36. In addition to the gear wheel 30 the shaft 32 also supports a gear wheel 38 which is unrotatably connected with the shaft. The gear wheel 38 engages a gear wheel 40 which is unrotatably supported by a shaft 42. Outside the housing 8 the shaft 42 has a portion 44 having enlarged diameter. The shaft 42 is rotatably journalled in the housing 8 by means of roller bearings 46 and 48. In order to prevent axial play of the shaft 42 the shaft is provided with a bearing ring 50 which together with the shaft portion 44 contacts an annular portion 56 of the housing 2 through roller bearings 52 and 54. The bearing ring 50 is forced against the roller bearing 52 and thereby against the portion 56 of the housing by means of a nut 58 on the shaft 42 and a spring washer 60 provided between the nut 58 and the bearing ring 50.

The portion 44 of the shaft 42 supports a clamping device 62, for example a chuck. The clamping device 62 supports a threading electrode 64 which by means of the apparatus according to the invention shall be provided with a thread 66 having a pitch which is compensated or modified with regard to the fact that the thread 66 is to be used for forming a thread in a material which is subjected to dimensional changes after the forming, for example a plastic material. The thread 66 of the threading electrode 64 is provided by means of an electrode 68 by means of which the groove forming the thread 66 of the threading electrode 64 is sparked in the threading electrode 64.

The rotation of the lead screw 18 is transmitted to the clamping device 62 and the threading electrode 64 through the tooth wheels 28 and 30, the shaft 32, the tooth wheel 38, the tooth wheel 40 and the shaft 42, whereby the transmission ratio between said tooth wheels will determine the relationship between the rotation of the lead screw 18 and the rotation of the threading electrode 64. By using different tooth wheels in the gear unit comprising said tooth wheel it is possible to determine the relationship between the pitch of the thread 16 of the lead screw 18 and the thread 66 of the threading electrode 64.

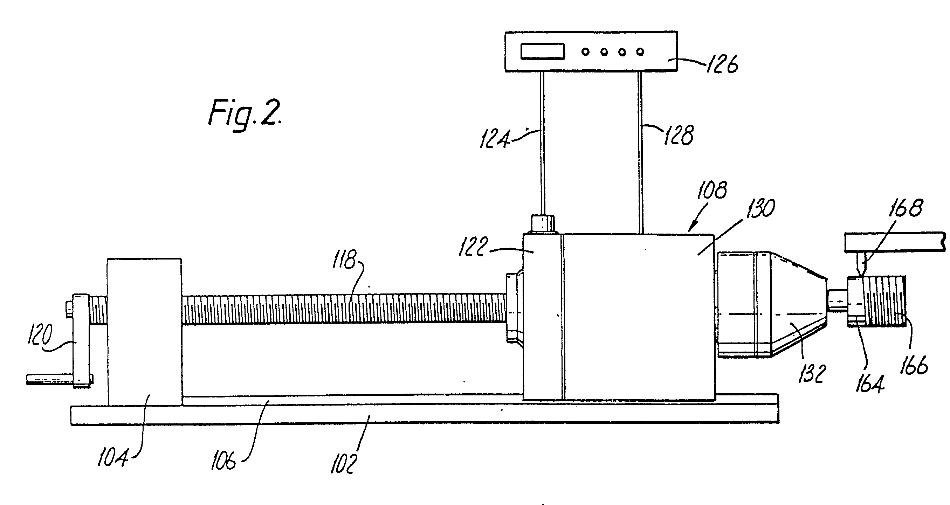

In Fig. 2 there is shown another embodiment of an apparatus according to the invention. The apparatus according to Fig. 2 comprises a base plate 102, supporting a carrier 104 and a guide 106 for a housing 108. The carrier 104 comprises a nut, not shown, which is of the same kind as the nut 10 of the embodiment according to Fig. 1. A lead screw 118 extends through the nut and is provided with a crank at its outer end. At its opposite end in relation to the crank 120 the lead screw 118 is rotatably but undisplaceably journalled in the housing 108 providing that a rotation of the lead screw 118 by means of the crank 120 results in a displacement of the housing 108 along the guiding 106 on the base plate 102. The housing 108 comprises a pulse generator 122 by means of which the rotation of the lead screw 118 is sensed. Preferably the end of the lead screw positioned in the housing 108 is provided with markings which are sensed by a sensor, whereupon a number of pulses corresponding to the number of sensed markings is fed from the pulse generator to a microprocessor 126 through a line 124.

The micro-processor 126 is adapted to convert the pulses received from the pulse generator 122 into a number of pulses which has been modified with regard to a value set on the micro-processor 126. Preferably the micro-processor 126 can with an accuracy of 2 decimals provide a percentage modification of the relationship between the number of input and output pulses. The output pulses are supplied to a step motor 130 positioned in the housing 108 through a line 128, the step motor 130 thereby performing a rotational movement dependent on the number of received pulses. The step motor is connected with a chuck 132 supporting a threading electrode 164 which is to be provided with a thread 166 by means of an electrode 168 in the same way as described above with reference to Fig. 1.

It is realized that the percentage modification of the rotation between the lead screw 118 and the step motor 130 and thereby the chuck 132 and the threading electrode 164, which modification has been set on the microprocessor 126 provides for a desired modification of the pitch of the thread 166 of the threading electrode 164 in relation to the thread of the lead screw 118.

It is also realized that it is possible to generate conical threads and threads having several entrances by means of the apparatuses shown and described.

An apparatus according to the invention can, of course, be included in such a machine support that the thread can be generated by means of milling or grinding.

The invention can be modified within the scope of the following claims.

Thus, it is possible to use a transmission device comprising chains and sprockets or any other kind of changing mechanism instead of the above described gear change device and the above described electronic apparatus in order to modify the rotation of the lead screw to the desired, modified rotation of the clamping device supporting the work-piece which shall be provided with a thread.

## Claims

1. Apparatus for generating threads and the like comprising a device (62; 132) for setting up a work-piece (64; 164) having a surface of revolution in which the thread (66; 166) is to be formed, a tool (68; 168) for generating in said surface of rotation a groove for forming the thread, and a device (8—60; 108—130) for rotating the surface of revolution around its axis in relation to the tool and for feeding the surface of revolution along said axis in relation to the tool for providing the pitch of the thread, characterized in that the device (8—60; 108—130) for rotating and feeding the work-piece (64; 164) comprises a compensation device (28—42; 122—130) for changing the relationship between the rotation and feeding of the surface of revolution and thereby the pitch of the thread (66; 166) from a value supplied to the compensation device to a value modified to a predetermined degree.

2. Apparatus as claimed in claim 1, characterized in that the device (8—60; 108—130) for rotating and feeding the work-piece (64; 164) comprises a lead screw (18; 118) which is connected with a stationary thread (14), a housing (8; 108) connected with the lead screw and displaceable along a guide (6; 106), the housing being adapted to be displaced along the guide at the rotation of the lead screw, a clamping device (62; 132) which is rotatably journalled in the housing and is adapted to hold the work-piece, and a transmission device (28—42; 122—130) for transmitting the rotation of the lead screw to the clamping device at a desired ratio.

3. Apparatus as claimed in claim 2, characterized in that the transmission device is constituted by a gear unit (28—42).

4. Apparatus as claimed in claim 2, characterized in that the transmission device (122—130) comprises a sensor for sensing the rotation of the lead screw, a pulse generator (122), for generating pulses in dependence of said rotation, a processor (126) for modifying the number of input pulses to a desired number of output pulses and a step motor (130) for rotating the clamping device (132) holding the work-piece (164) in response to the number of output pulses from the processor.

## Revendications

1. Appareil pour former des filetages et analogues comprenant un dispositif (62; 132) pour supporter une pièce à usiner (64; 164) comportant une surface de révolution dans laquelle le filetage (66; 166) doit être formé, un outil (68; 168) pour engendrer dans ladite surface de rotation un sillon pour former le filetage, et un dispositif (8—60; 108—130) pour faire tourner la surface de révolution autour de son axe par rapport à l'outil et pour avancer la surface de révolution le long dudit axe par rapport à l'outil en vue d'obtenir le pas du filetage, caractérisé en ce que le dispositif (8—60; 108—130) servant à faire tourner et à avancer la pièce à usiner (64; 164) comprend un dispositif de compensation (28—42; 122—130) destiné à modifier la relation entre la rotation et l'avance de la surface de révolution et, de ce fait, le pas du filetage (66; 166) à partir d'une valeur fournie au dispositif de compensation jusqu'à une valeur modifiée dans un degré prédéterminé.

2. Appareil tel que revendiqué dans la revendication 1, caractérisé en ce que le dispositif (8—60; 108—130) servant à faire tourner et à avancer la pièce à usiner (64; 164) comprend une vis mère (18; 118) qui est en prise avec un filetage fixe (14), un boîtier (8; 108) accouplé à la vis mère et pouvant se déplacer le long d'un guide (6; 106), ce boîtier étant adapté pour être déplacé le long du guide lors de la rotation de la vis mère, un dispositif de serrage (62; 132) qui est monté de façon tournante dans le boîtier et est adapté pour supporter la pièce à usiner, et un dispositif de transmission (28—42; 122—130) pour transmettre la rotation de la vis mère au dispositif de serrage suivant un rapport voulu.

3. Appareil tel que revendiqué dans la revendication 2, caractérisé en ce que le dispositif de transmission est constitué par un train d'engrenages (28—42).

4. Appareil tel que revendiqué dans la revendication 2, caractérisé en ce que le dispositif de transmission (122—130) comprend un détecteur pour détecter la rotation de la vis mère, un générateur (122) d'impulsions pour engendrer des impulsions en fonction de ladite rotation, un dispositif de traitement (126) pour modifier le nombre d'impulsions d'entrée jusqu'à un nombre voulu d'impulsions de sortie et un moteur pas à pas (13) pour faire tourner le dispositif de serrage (132) supportant la pièce à usiner (164) en réponse au nombre d'impulsions de sortie du dispositif de traitement.

## Patentansprüche

1. Vorrichtung zum Herstellen von Gewinden und dgl. mit einer Einrichtung (62; 132) zum Einspannen eines Werkstückes (64; 164), das eine Rotationsfläche aufweist, in welcher das Gewinde (66; 166) zu bilden ist, einem Werkzeug (68; 168) zur Erzeugung einer das Gewinde bildenden Vertiefung in der Rotationsfläche und einer Einrichtung (8—60; 108—130) zum Drehen der Rotationsfläche um ihre Achse und bezüglich dem Werkzeug und für das Vorschieben der Rotationsfläche längs dieser Achse und bezüglich dem Werkzeug zur Erzeugung der Gewindesteigung, dadurch gekennzeichnet, dass die Einrichtung (8—60; 108—130) zum Drehen und Vorschieben des Werkstückes (64; 164) eine Kompensationsvorrichtung (28—42; 122—130) aufweist zur Aenderung des Verhältnisses zwischen der Drehbewegung und dem Vorschub der Rotationsfläche und damit der Steigung des Gewindes (66; 166) von einem Wert, welcher der Kompensationseinrichtung zugeführt wird auf einen Wert, der in vorbestimmtem Mass modifiziert ist.

2. Vorrichtung nach Anspruch 1, dadurch gekennzeichnet, dass die Einrichtung (8—60; 108—130) zum Drehem und Vorschieben des Werkstückes (64; 164) eine Leitspindel (18; 118) aufweist, die mit einem stationären Gewinde (14) in Eingriff steht, ein Gehäuse (8; 108), das mit der Leitspindel verbunden ist und längs einer Führung (6; 106) verschiebbar ist, wobei das Gehäuse dazu bestimmt ist, sich durch die Drehung der Leitspindel längs der Führung zu verschieben, eine Einspanneinrichtung (62; 132), welche drehbar im Gehäuse gelagert und dazu bestimmt ist, das Werkstück festzuhalten, sowie eine Uebertragungseinrichtung (28—42; 122—130) zum Uebertragen der Drehung der Leitspindel an die Einspanneinrichtung in einem gewünschten Verhältnis.

3. Vorrichtung nach Anspruch 2, dadurch gekennzeichnet, dass die Uebertragungseinrichtung von einer Getriebeeinheit (28—42) gebildet ist.

4. Vorrichtung nach Anspruch 2, dadurch gekennzeichnet, dass die Uebertragungseinrichtung (122—130) einen Sensor aufweist zum Abtasten der Leitspindelrotation, einen Impulsgenerator (122) zur Erzeugung von Impulsen in Abhängigkeit von dieser Rotation, einen Prozessor (126) zur Modifizierung der Anzahl der Eingangsimpulse auf eine gewünschte Anzahl Ausgangsimpulse sowie einen Schrittmotor (130) zum Drehen der Einspanneinrichtung (132), welche das Werkstück (164) hält, in Entsprechung zur Anzahl der Ausgangsimpulse aus dem Prozessor.

Fig. 1.

0022 169

*Fig.2.*